# EUROPEAN PATENT APPLICATION

(11) **EP 4 804 667 A1**
(43) Date of publication of application: **09.09.2026**
(21) Application number: 24893223.8
(22) Date of filing: 04.11.2024
(51) Int. Cl.: H04W 72/04

(54) **COMMUNICATION METHOD AND APPARATUS**

(30) Priority: 20.11.2023 CN 202311554170
(71) Applicant: Huawei Technologies Co., Ltd., Shenzhen, Guangdong 518129 (CN)
(72) Inventor: LIU, Yating, Shenzhen, Guangdong 518129 (CN); ZHANG, Yi, Shenzhen, Guangdong 518129 (CN); SU, Hongjia, Shenzhen, Guangdong 518129 (CN); QI, Hong, Shenzhen, Guangdong 518129 (CN)
(74) Representative: Körber, Martin Hans
(86) International application number: PCT/CN2024/129670
(87) International publication number: WO 2025/108065

(57) **Abstract**

A communication method and apparatus are provided, and are applied to the fields of the internet of vehicles, the ambient internet of things, the internet of things, and the like. The method includes: receiving first indication information from a first terminal device, and receiving second indication information from a second terminal device, where the first indication information indicates a first resource located in a first slot, and the second indication information indicates a second resource located in a second slot; sending third indication information to the first terminal device, where the third indication information indicates to adjust the first resource to a third resource, and the third resource is located in the second slot; and receiving a first reference signal on the third resource, and receiving a second reference signal on the second resource. According to the method, when it is determined to receive, in different slots, reference signals in different resources, resources in the different slots are adjusted to a same slot. In this way, the reference signals in the different resources can be received in the same slot, thereby improving receiving efficiency and reducing a transmission delay of the reference signals.

## Description

### CROSS-REFERENCE TO RELATED APPLICATIONS

This application claims priority to Chinese Patent Application No. 202311554170.X, filed with the China National Intellectual Property Administration on November 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

On a sidelink (sidelink), a transmission resource may be reserved between terminal devices in an autonomous resource selection mode. If one terminal device simultaneously communicates with a plurality of terminal devices, because each of the plurality of terminal devices independently reserves a resource in a resource pool, locations of resources reserved by the plurality of terminal devices are highly random. As a result, the locations of the resources are scattered. Consequently, a receive-end device frequently switches between the plurality of resources, resulting in low communication efficiency and a long delay.

### SUMMARY

This application provides a communication method and apparatus, to improve communication efficiency.

According to a first aspect, this application provides a communication method. The method is applicable to a scenario like an internet of vehicles. The method is performed by a terminal device or a module or a chip in the terminal device. Herein, an example in which the method is performed by the terminal device is used for description. In the method, first indication information from a first terminal device is received, and second indication information from a second terminal device is received, where the first indication information indicates a first resource, the second indication information indicates a second resource, the first resource is located in a first slot, and the second resource is located in a second slot; third indication information is sent to the first terminal device, where the third indication information indicates to adjust the first resource to a third resource, and the third resource is located in the second slot; and a first reference signal from the first terminal device is received on the third resource, and a second reference signal from the second terminal device is received on the second resource.

According to the method provided in this application, when it is determined to receive, in different slots, reference signals in different resources, resources in the different slots are adjusted to a same slot. In this way, the reference signals in the different resources can be received in the same slot, thereby improving receiving efficiency, reducing a transmission delay of the reference signals, and improving communication efficiency.

In a possible implementation, before the sending the third indication information to the first terminal device, the method further includes: determining to receive reference signals on the first resource and the second resource by using a same receive beam.

According to the method, a fourth terminal device may receive, in the second slot, a plurality of reference signals on a plurality of resources by using a same receive beam, thereby improving beam sweeping efficiency and reducing a beam sweeping delay.

In a possible implementation, the third indication information includes at least one of the following: time domain information of the third resource, frequency domain information of the third resource, time domain information of the first resource, and frequency domain information of the first resource.

In a possible implementation, the time domain information of the third resource indicates a slot offset value between the third resource and the first resource; or the time domain information of the third resource indicates a slot offset value between the third resource and a first physical resource, and the first physical resource is used to carry the first indication information; or the time domain information of the third resource indicates a frame index of the third resource and a slot index of the third resource.

According to the method, a slot offset value of the third resource after adjustment relative to the first resource or a resource in which the first indication information is located is indicated, so that the first terminal device can accurately determine a time domain location of the third resource, thereby reducing overheads of indication information.

In a possible implementation, when the time domain information of the third resource indicates the slot offset value between the third resource and the first resource, the time domain information of the third resource further indicates a location sequence of the third resource and the first resource in time domain.

According to the method, the location sequence of the third resource and the first resource in time domain is indicated, so that the time domain location of the third resource can be accurately determined based on the slot offset value.

In a possible implementation, the method further includes: receiving fourth indication information from the first terminal device, and receiving fifth indication information from a third terminal device, where the fourth indication information indicates a fourth resource, the fifth indication information indicates a fifth resource, the fourth resource is located in a third slot, and the fifth resource is located in a fourth slot, where the third indication information further indicates to adjust the fourth resource to a sixth resource, and the sixth resource is located in the fourth slot.

In a possible implementation, the method further includes: determining to receive reference signals on the fourth resource and the fifth resource by using a same receive beam.

In a possible implementation, the third indication information further includes at least one of the following: time domain information of the fourth resource, frequency domain information of the fourth resource, time domain information of the sixth resource, and frequency domain information of the sixth resource.

In a possible implementation, when the third indication information includes the time domain information of the third resource and the time domain information of the sixth resource, a location sequence of the time domain information of the third resource and the time domain information of the sixth resource in the third indication information is the same as a location sequence of the first resource and the fourth resource in time domain.

According to the method, a location sequence of a plurality of adjusted resources in time domain is implicitly indicated by using a location sequence of time domain information of the resources, so that overheads of indication information can be reduced, and resource utilization can be improved.

In a possible implementation, when the third indication information includes the frequency domain information of the third resource and the frequency domain information of the sixth resource, a location sequence of the frequency domain information of the third resource and the frequency domain information of the sixth resource in the third indication information is the same as a location sequence of the first resource and the fourth resource in time domain.

According to the method, a location sequence of a plurality of adjusted resources in time domain is implicitly indicated by using a location sequence of frequency domain information of the resources, so that overheads of indication information can be reduced, and resource utilization can be improved.

In a possible implementation, the method further includes: receiving sixth indication information or seventh indication information from the first terminal device, where the sixth indication information indicates to accept adjusting the first resource to the third resource, and the seventh indication information indicates to reject adjusting the first resource to the third resource.

According to the method, the fourth terminal device can determine whether the first terminal device accepts the resource after adjustment, to ensure that a transmit end and a receive end have consistent understanding of resource adjustment, and improve communication efficiency.

In a possible implementation, the method further includes: receiving indication information from a plurality of terminal devices, where the first terminal device and the second terminal device are two of the plurality of terminal devices.

According to a second aspect, this application provides a communication method. The method is applicable to a scenario like an internet of vehicles. The method is performed by a terminal device or a module or a chip in the terminal device. Herein, an example in which the method is performed by the terminal device is used for description. In the method, first indication information is sent, where the first indication information indicates a first resource, and the first resource is located in a first slot; third indication information is received from a fourth terminal device, where the third indication information indicates to adjust the first resource to a third resource, and the third resource is located in a second slot; and a first reference signal is sent on the third resource.

In a possible implementation, the method further includes: sending sixth indication information or seventh indication information to the fourth terminal device, where the sixth indication information indicates to accept adjusting the first resource to the third resource, and the seventh indication information indicates to reject adjusting the first resource to the third resource.

In a possible implementation, the third indication information includes at least one of the following: time domain information of the third resource, frequency domain information of the third resource, time domain information of the first resource, and frequency domain information of the first resource.

In a possible implementation, the time domain information of the third resource indicates a slot offset value between the third resource and the first resource; or the time domain information of the third resource indicates a slot offset value between the third resource and a first physical resource, and the first physical resource is used to carry the first indication information; or the time domain information of the third resource indicates a frame index of the third resource and a slot index of the third resource.

In a possible implementation, when the time domain information of the third resource indicates the slot offset value between the third resource and the first resource, the time domain information of the third resource further indicates a location sequence of the third resource and the first resource in time domain.

In a possible implementation, the method further includes: sending fourth indication information, where the fourth indication information indicates a fourth resource, the fourth resource is located in a third slot, where the third indication information further indicates to adjust the fourth resource to a sixth resource, and the sixth resource is located in a fourth slot.

In a possible implementation, the third indication information further includes at least one of the following: time domain information of the fourth resource, frequency domain information of the fourth resource, time domain information of the sixth resource, and frequency domain information of the sixth resource.

In a possible implementation, when the third indication information includes the time domain information of the third resource and the time domain information of the sixth resource, a location sequence of the time domain information of the third resource and the time domain information of the sixth resource in the third indication information is the same as a location sequence of the first resource and the fourth resource in time domain; and/or when the third indication information includes the frequency domain information of the third resource and the frequency domain information of the sixth resource, a location sequence of the frequency domain information of the third resource and the frequency domain information of the sixth resource in the third indication information is the same as a location sequence of the first resource and the fourth resource in time domain.

According to a third aspect, this application further provides a communication apparatus. The communication apparatus can implement any method provided in either of the first aspect and the second aspect. The communication apparatus may be implemented by hardware, or may be implemented by executing corresponding software by hardware. The hardware or software includes one or more units or modules corresponding to the foregoing functions.

In a possible implementation, the communication apparatus includes a processor. The processor is configured to support the communication apparatus in performing a corresponding function of the network device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device.

In a possible implementation, the communication apparatus includes corresponding functional modules respectively configured to implement the steps in the foregoing method. The functions may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in either of the first aspect and the second aspect. Details are not described herein.

According to a fourth aspect, a communication apparatus is provided, including a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement a functional module of the method according to any possible implementation of either of the first aspect and the second aspect by using a logic circuit or by executing a computer program or instructions. Optionally, the communication apparatus further includes a memory, and the memory is configured to store a computer program or instructions.

According to a fifth aspect, a computer program product storing instructions is provided. When a computer reads and executes the computer program product, the method according to any possible implementation of either of the first aspect and the second aspect is implemented.

According to a sixth aspect, a circuit is provided. The circuit is configured to perform the method according to any possible implementation of either of the first aspect and the second aspect. The circuit may include a chip circuit. Optionally, the circuit may be further coupled to a memory.

According to a seventh aspect, a chip is provided. The chip includes a processor. When executing a computer program or instructions, the processor is configured to implement the method according to any possible implementation of either of the first aspect and the second aspect. Optionally, the chip may further include a memory. The chip may include a chip, or may include a chip and another discrete device.

According to an eighth aspect, a communication apparatus is provided, and includes a processor. The processor implements the method according to any possible implementation of either of the first aspect and the second aspect by using a logic circuit or by executing a computer program or instructions.

According to a ninth aspect, a communication apparatus is provided, and includes a unit or a module configured to perform the method according to any possible implementation of either of the first aspect and the second aspect.

According to a tenth aspect, a computer-readable storage medium is provided. The computer-readable storage medium stores a computer program or instructions. When the computer program or the instructions are executed by a processor, the method according to any possible implementation of either of the first aspect and the second aspect is implemented.

According to an eleventh aspect, an embodiment of this application further provides a communication system. The communication system includes: a fourth terminal device configured to implement the method according to the first aspect and any possible implementation of the first aspect; and a first terminal device configured to implement the method according to the second aspect and any possible implementation of the second aspect.

### BRIEF DESCRIPTION OF DRAWINGS

FIG. 1 is a diagram of an architecture of a network device according to an embodiment of this application;
FIG. 2 is a diagram of a resource selection window according to an embodiment of this application;
FIG. 3 is a diagram of a PSFCH period according to an embodiment of this application;
FIG. 4 is a diagram of a beam management procedure according to an embodiment of this application;
FIG. 5 is a diagram of a network architecture applicable to an embodiment of this application;
FIG. 6 is a schematic flowchart of a communication method according to an embodiment of this application;
FIG. 7 is a diagram of indicating a resource in a resource pool according to an embodiment of this application;
FIG. 8 is a diagram of resource adjustment according to an embodiment of this application;
FIG. 9 is a diagram of resource adjustment according to an embodiment of this application;
FIG. 10 is a diagram of resource adjustment according to an embodiment of this application;
FIG. 11 is a diagram of resource adjustment according to an embodiment of this application;
FIG. 12 is a diagram of resource adjustment according to an embodiment of this application;
FIG. 13 is a diagram of a PSFCH resource according to an embodiment of this application;
FIG. 14 is a diagram of resource adjustment according to an embodiment of this application;
FIG. 15 is a diagram of resource adjustment according to an embodiment of this application;
FIG. 16 is a diagram of a structure of third indication information according to an embodiment of this application;
FIG. 17 is a diagram of a structure of third indication information according to an embodiment of this application;
FIG. 18 is a diagram of a structure of a communication apparatus according to an embodiment of this application;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. In addition, step numbers in embodiments described in this application are merely intended to distinguish between different steps, but are not intended to limit a sequence of the steps.

The method provided in embodiments of this application may be applied to long term evolution (long term evolution, LTE) or a 5G new radio (new radio, NR) system, or may be applied to various future communication systems, for example, a 6th generation (6th generation, 6G) communication system. The method provided in embodiments of this application may be further applied to the fields of vehicle-to-everything (vehicle-to-everything, V2X) communication, the internet of vehicles, autonomous driving, assisted driving, and the like.

The method and the apparatus provided in embodiments of this application are based on a same or similar technical concept. Because problem resolving principles of the method and the apparatus are similar, mutual reference may be made to implementations of the apparatus and the method. Repeated parts are not described.

The following first describes some terms in embodiments of this application, to facilitate understanding of a person skilled in the art.

The communication apparatus in this application may be an apparatus, a device, a chip, or a module that can communicate with another device in a wireless and/or wired manner, and includes but is not limited to an apparatus or a device like a network device or a terminal device.

In embodiments of this application, the network device may be a device in a wireless network, and the network device may also be referred to as a network apparatus, a radio access network device, or an access network device. For example, the network device may be a radio access network (radio access network, RAN) node that connects the terminal device to the wireless network, and may also be referred to as an access network device. The network device includes but is not limited to a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, or an access node in a wireless fidelity (wireless fidelity, Wi-Fi) system, or may be a module or unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used for the network device are not limited in this application.

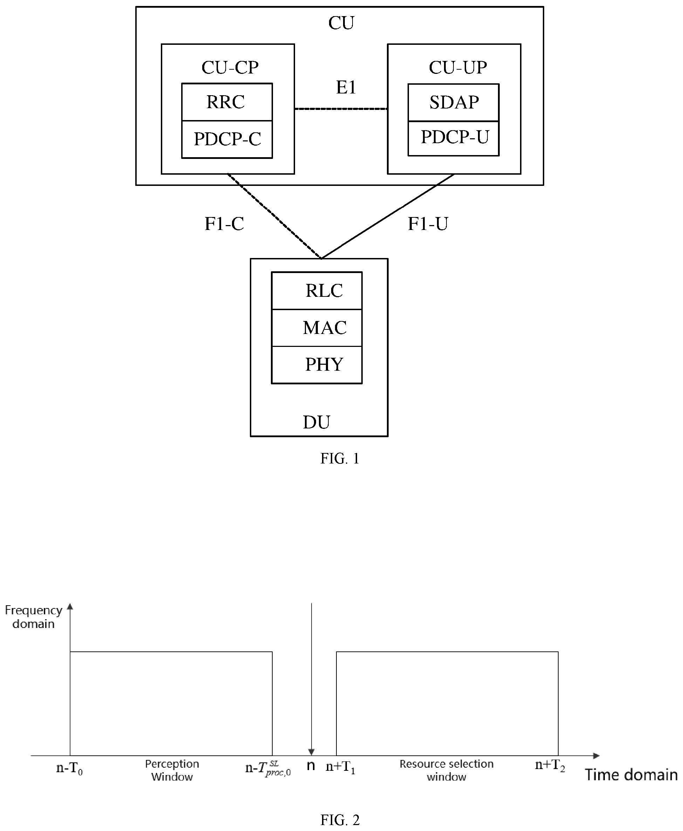

As shown in FIG. 1, in some implementations, a network device may include a central unit (centralized unit, CU) and a distributed unit (distributed unit, DU). A RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, to implement functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device in embodiments of this application may be a wireless terminal apparatus that can receive scheduling and indication information from a network apparatus. The terminal device may be referred to as a terminal apparatus, and may also be referred to as user equipment (user equipment, UE), a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in the industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). The terminal device may alternatively be a device in device-to-device (device-to-device, D2D) communication, for example, an electricity meter or a water meter. In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for human-machine interconnection and thing-thing interconnection.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Preconfigured content is usually information recorded/written in advance in hardware and/or software of the terminal apparatus, is determined by a factory device vendor, and may be changed by software or hardware.

A (pre)configuration may be classified into a network apparatus (pre)configuration and a terminal apparatus (pre)configuration. If a (pre)configuration is a network apparatus (pre)configuration, the (pre)configuration may be performed based on a system information block (system information block, SIB) or RRC signaling. If a (pre)configuration is a terminal apparatus (pre)configuration, the (pre)configuration may be performed based on PC5-RRC signaling.

This application may be applied to cellular vehicle-to-everything (Cellular Vehicle-To-Everything, C-V2X) communication, and C-V2X is a V2X communication technology developed based on a cellular system. C-V2X uses and enhances a function and an element of a current cellular network, to implement low-delay and high-reliability communication between various nodes in a vehicle network. C-V2X may include vehicle-to-vehicle (Vehicle-to-Vehicle, V2V) communication, vehicle-to pedestrian (Vehicle-to-Pedestrian, V2P) communication, vehicle-to-infrastructure (Vehicle-to-Infrastructure, V2I) communication, and vehicle-to-network (Vehicle-to-Network, V2N) communication. As the cellular system evolves from LTE to 5G, C-V2X evolves from LTE-V2X to NR-V2X (New Radio V2X, NR-V2X). A vehicle-to-vehicle communication technology supported by V2X may be further applied to D2D communication in any system.

In this application, communication may be performed between a network device and a terminal device or between terminal devices by using a licensed spectrum, an unlicensed spectrum, or both a licensed spectrum and an unlicensed spectrum, may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

The terminal device may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or UE-specific (UE-specific) RRC signaling. Alternatively, the terminal device may use preconfigured SL resource pool configuration information or SL BWP configuration information. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz). The resource pool may also be referred to as an SL resource pool.

In a V2X SL, the terminal device may determine a transmission resource in an autonomous resource selection mode (which may also be referred to as a mode 2 (mode 2)). If a transmission resource is selected in the autonomous resource selection mode, the terminal device may autonomously select, in the resource pool, a transmission resource in a resource selection window based on a result of sensing in a sensing window of the terminal device, to perform communication. A specific resource selection process is not limited in this application, and details are not described herein.

For example, the terminal device triggers mode (mode) 2 resource selection in a slot n, and performs sensing (sensing) and resource selection to determine a time-frequency resource for sending a first reference signal. As shown in FIG. 2, specific steps are as follows:
Step 1: A terminal device determines a resource selection window [n+T₁, n+T₂].

Each candidate resource *R_{x,y}* in the resource selection window is defined by one slot in time domain and *L_{subCH}* contiguous subchannels in frequency domain. One slot includes a plurality of orthogonal frequency division multiplexing (orthogonal frequency division multiplexing, OFDM) symbols, for example, may include 14 OFDM symbols; and one subchannel includes a plurality of physical resource blocks (resource blocks, RBs).$0 \leq {T}_{1} \leq {T}_{proc , 1}^{SL} ⋅ {T}_{proc , 1}^{SL}$ is determined based on Table 1, and may represent a delay of processing resource selection and reference signal sending by a terminal apparatus at a transmit end. *µ_{SL}* is a configured subcarrier spacing, and may be a subcarrier spacing of an SL resource pool. A value of T₁ is not limited, T₁ is an integer greater than 0, and T₁ may be determined by the terminal device, preset, preconfigured, or configured by a network device. This specifically depends on an implementation. If *T*_{2*min*} (a value of the parameter is configured by a higher layer) is less than a remaining packet delay budget (packet delay budget, PDB), *T*_{2*min*}≤T₂≤PDB (packet delay budget), where a value of T₂ is not limited, T₂ is an integer greater than T₁, and T₂ may be determined by the terminal device, preset, preconfigured, or configured by the network device. This specifically depends on an implementation. If *T*_{2*min*} is greater than or equal to the remaining PDB, otherwise, T₂ is equal to the remaining PDB. *L_{SUbCH}* may be determined by the terminal device, preset, preconfigured, or configured by the network device.

For example, as shown in Table 1, ${T}_{proc , 1}^{SL}$ and *µ_{SL}* are in one-to-one correspondence:

**Table 1**

| *µ_{SL}* | ${T}_{proc , 1}^{SL}$ (unit: slot) |
|---|---|
| 0 | 3 |
| 1 | 5 |
| 2 | 9 |
| 3 | 17 |

Step 2: The terminal device determines a sensing window (sensing window). For example, the sensing window is represented as $\left[n-{T}_{0},n-{T}_{proc , 0}^{SL}\right)$.

In this application, ${T}_{proc , 0}^{SL}$ is a delay of processing a sensing result by the terminal device. Specifically, ${T}_{proc , 0}^{SL}$ may be a quantity of slots required by the terminal device to process the sensing result. *T*₀ is a positive integer.

Optionally, ${T}_{proc , 0}^{SL}$ and/or *T*₀ are/is related to the subcarrier spacing *µ_{SL}*. For example, as shown in Table 2, ${T}_{proc , 0}^{SL}$ and *µ_{SL}* are in one-to-one correspondence:

**Table 2**

| *µ_{SL}* | ${T}_{proc , 0}^{SL}$ (unit: slot) |
|---|---|
| 0 | 1 |
| 1 | 1 |
| 2 | 2 |
| 3 | 4 |

It should be understood that there is no strict limitation on an execution time sequence between step 1 and step 2.

Step 3: The terminal device determines a reference signal received power (reference signal received power, RSRP) threshold *Th*(*pᵢ, pⱼ*).

The RSRP threshold is related to a priority *prio_{TX}* of a reference signal to be sent by the terminal device, and is further related to a priority *prio_{RX}* indicated by received sidelink control information (Sidelink Control Information, SCI). The RSRP threshold may be specifically an RSRP threshold corresponding to a (*prio_{RX} + (prio_{TX} -* 1) * 8 ) th index (index) in an RSRP threshold set configured for a resource pool. The RSRP threshold may be measured in decibels (dB).

Step 4: The terminal device initializes an available resource set *S_{A}*. An initialized *S_{A}* may be a set of all time-frequency resource units in the resource selection window.

Step 5: When any one of the following conditions is met, exclude corresponding resources from *S_{A}*:
(a) slots that are reserved for all periodic resources configured in a resource pool and that correspond to a slot not sensed by the terminal device in the sensing window. For example, the slot is a slot in which the terminal device is in a sending state. Due to a limitation of a half-duplex transceiver, when the terminal device is in the sending state, the terminal device cannot perform receiving. Therefore, the sending slot cannot be sensed.

Step 5a: If time-frequency resources excluded from *S_{A}* are less than X% of total time-frequency resources in the resource selection window, perform step 4 and step 5 again. A value of X% is greater than 0. The value of X% may be configured by the network side device or preconfigured, for example, X%=20%. This is not limited.

Step 6: When all the following conditions are met, exclude corresponding resources from *S_{A}*.
(a) Received first-stage SCI is successfully decoded.
(b) An RSRP result obtained by performing RSRP measurement on a de-modulation reference signal (de-modulation reference signal, DMRS) that is of a physical sidelink control channel (physical sidelink control channel, PSCCH) or a PSSCH and that is included in a time-frequency resource (including a time-frequency resource periodically reserved for new transmission and/or retransmission of the PSSCH, and a time-frequency resource aperiodically reserved for new transmission and/or retransmission of the PSSCH) reserved by the received first-stage SCI for physical sidelink shared channel (physical sidelink shared channel, PSSCH) transmission is greater than the RSRP threshold determined in step 203.
(c) Time-frequency resources reserved by the received first-stage SCI are in the resource selection window, and include a retransmission resource and a periodically reserved resource that are indicated by the first-stage SCI.

Step 7: If remaining time-frequency resources are less than X% of the total time-frequency resources in the resource selection window after time-frequency resources are excluded from *S_{A}*, increase the RSRP threshold determined in step 3 (by 3 dB each time), and perform step 4 to step 7 again.

After step 1 to step 7, the terminal device may randomly select at least one time-frequency resource from *S_{A}* to send data. Before sending the data, the terminal device may further perform resource re-evaluation on the selected time-frequency resource. A specific resource re-evaluation manner is not limited in this application, and details are not described herein.

The foregoing step 1 to step 7 are merely examples. In this application, another method may alternatively be used to reserve a time-frequency resource. Examples are not provided herein one by one.

After selecting a transmission resource from the resource pool in the autonomous resource selection mode, the terminal device may indicate the selected transmission resource by using the sidelink control information (Sidelink Control Information, SCI). SCI of an NR SL system is classified into first-stage SCI and second-stage SCI. A physical sidelink control channel (physical sidelink control channel, PSCCH) carries the first-stage SCI, and the first-stage SCI is used to schedule the second-stage SCI and a physical sidelink shared channel (physical sidelink shared channel, PSSCH). Because the SL is a distributed system, all UE can decode the second-stage SCI and the PSSCH only after correctly decoding the first-stage SCI. A PSCCH may exist on each subchannel in each slot. To be specific, a time domain start position of a PSCCH is a 2^{nd} symbol used for SL transmission in each slot, and a length is two or three symbols (determined by resource pool configuration information). A frequency domain position is a smallest physical resource block (physical resource block, PRB) index of each subchannel, and a length is at least 10 PRBs (determined by the resource pool configuration information), but does not exceed a size of the subchannel.

A frequency resource assignment (Frequency resource assignment) field and a time resource assignment (Time resource assignment) field in the first-stage SCI respectively indicate a frequency domain resource and a time domain resource for the PSSCH. A resource reservation period (Resource reservation period) field indicates to periodically reserve a resource for performing transmission of the PSSCH. A value of the resource reservation period field is configured by the network device, preconfigured, or predefined. A format of the second-stage SCI is indicated by the first-stage SCI.

NR-V2X supports physical hybrid automatic repeat request (hybrid automatic repeat request, HARQ)-acknowledgment (acknowledge, ACK) feedback. To be specific, for one PSSCH transmission, if a transmit-end user carries HARQ-ACK feedback enabling information in control information, a receive-end user needs to feed back response ACK/negative acknowledgment (negative acknowledgement, NACK) information based on a current PSSCH decoding result. Transmission of the ACK/NACK information is performed through a physical sidelink feedback channel (physical sidelink feedback channel, PSFCH).

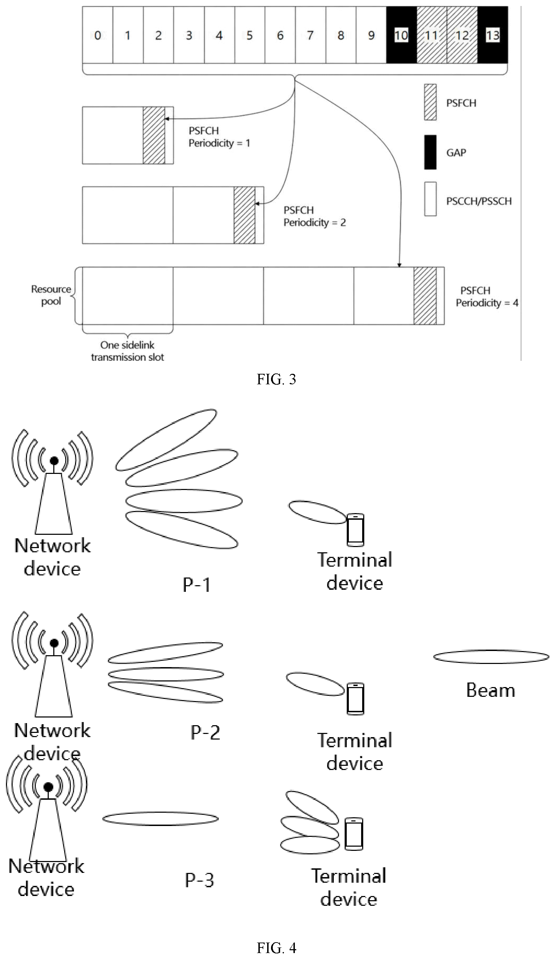

A PSFCH resource is a periodic resource configured in the resource pool, and a period configuration parameter ${N}_{PSSCH}^{PSFCH}$ of the PSFCH resource may be 0, 1, 2, or 4. ${N}_{PSSCH}^{PSFCH} = 0$ = 0 indicates that there is no PSFCH resource configuration in the resource pool, and PSFCH sending is not enabled in the resource, that is, physical layer HARQ feedback is not supported. For example, ${N}_{PSSCH}^{PSFCH} = 1 , 2 , 4$ indicates that there is one PSFCH slot in every ${N}_{PSSCH}^{PSFCH}$ slots in a time window, or it may be understood that a PSFCH period is ${N}_{PSSCH}^{PSFCH}$ slots. As shown in FIG. 3, in a slot in which a frequency domain resource of a PSFCH is located, the PSFCH occupies last two symbols before a gap (GAP). A PSFCH slot may be a slot including a PSFCH resource.

In a scenario of a V2X transmission mode 2, different from network apparatus scheduling, a terminal apparatus needs to autonomously select a PSSCH feedback resource based on a sensing result of the terminal apparatus. Therefore, to simplify a PSFCH frequency domain resource selection process, NR-V2X configures a PSFCH frequency domain resource for each PSSCH subchannel.

In FR2, a device may send a signal by using a beam. Table 3 shows frequency range definitions of FR1 and FR2.

**Table 3**

| Frequency range | Associated frequency |
|---|---|
| FR1 | 410 MHz to 7125 MHz |
| FR2 | 24250 MHz to 52600 MHz |

Beam management is an important technology proposed for a frequency range (frequency range, FR) 2 in a new radio (new radio, NR) system, is a process in which a network device and a terminal device obtain and maintain a set of beams used for sending and receiving, and is a reference workflow for beamforming in a multiple-input multiple-output (multiple-input multiple-output, MIMO) system. A frequency range of FR1 is 410 MHz to 7125 MHz, and a frequency range of FR2 is 24250 MHz to 52600 MHz.

Downlink beam management is used as an example. Beam management may be classified into three statuses based on working states. As shown in FIG. 4, operations in each status are summarized as follows:
P-1: The terminal device measures a first set of transmit beams of the network device (beams in the first set of transmit beams are wide beams) and selects a transmit beam of the network device and a receive beam of the terminal device.
P-2: Based on P-1, the terminal device measures a second set of transmit beams (beams in the second set of transmit beams are narrow beams), to improve the transmit beam of the network device.
P-3: The terminal device measures a transmit beam of a same network device by using different receive beams, to improve the receive beam of the terminal device.

Based on the foregoing operations in three statuses, downlink beam management is performed, and a basic procedure of the downlink beam management is as follows:
The network device configures a maximum of 64 beam directions, where each beam direction corresponds to one synchronization signal block (Synchronization Signal Block, SSB) and a time-frequency resource used by the terminal device for beam reporting. The network device sequentially sends SSBs to all beam directions through sweeping, and each beam direction corresponds to one SSB. The terminal device performs beam measurement to obtain a reference signal received power (Reference Signal Received Power, RSRP) of the SSB. Then, the terminal device selects an SSB set through RSRP comparison, and reports sequence numbers of SSBs in the SSB set and a corresponding RSRP to the network device on a given time-frequency resource. The network device determines a transmit beam based on the information. A similar procedure is also used for uplink beam management, but different reference signals are used.

Further, to implement transmit beam training in the P-2 working state, the network device allocates *K_{S}* channel state information reference signal (Channel State Information Reference Signal, CSI-RS) resources to *K_{S}* transmit beams, and then sends these CSI-RS resources through periodic beam sweeping. Each beam direction corresponds to one CSI-RS resource. In these CSI-RS resources, a maximum quantity of CSI-RS ports is 2, and other uncertain resource mapping information needs to be configured by the network device and indicated to the terminal device by using RRC signaling. The network device sends a CSI-RS resource only in a single beam direction at a moment. The terminal device performs beam measurement to obtain a CSI-RS reference signal received power RSRP, and obtains a CSI-RS reference signal resource indicator (CSI-RS Resource Indicator, CRI). After measuring the RSRP, the terminal device selects one or more RSRP values and corresponding CRIs through comparison, and reports the selected RSRP values and corresponding CRIs to the network device on a given time-frequency resource. The network device determines, based on the reported information, a transmit beam that should be used.

A similar procedure is also used for uplink beam management, but different reference signals are used.

On a sidelink, the foregoing beam management procedure may also be used between terminal devices, to determine transmit beams used by the terminal devices to send signals to each other. In the beam management procedure, a terminal device that sends a reference signal may reserve a transmission resource in an autonomous resource selection mode. If one terminal device simultaneously performs the foregoing beam management procedure with a plurality of terminal devices, because each of the plurality of terminal devices independently reserves a resource in a resource pool, locations of resources reserved by the plurality of terminal devices are highly random. As a result, the locations of the resources are scattered. Consequently, a receive-end device frequently switches between the plurality of resources, and frequently switches a direction of a receive beam for receiving a reference signal, to reduce a beam sweeping delay. In addition, on the SL, if a plurality of terminal devices perform beam sweeping with a same receive-end device, the receive-end device needs to frequently perform beam sweeping on different resources in different slots. Consequently, a beam sweeping delay is increased, and resource utilization is low.

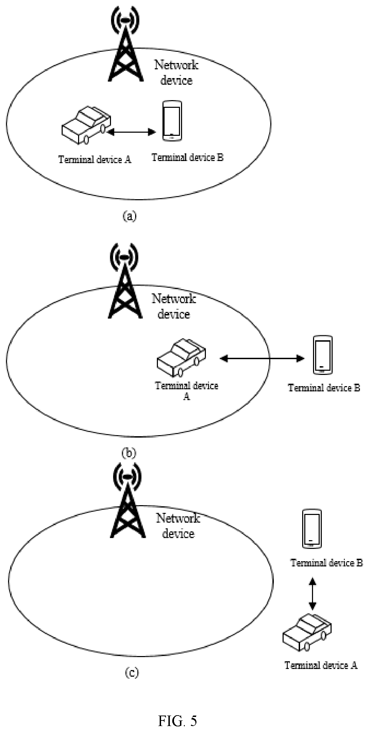

FIG. 5 is a communication network architecture to which an embodiment of this application is applicable. As shown in FIG. 5, a communication system may include a plurality of terminal apparatuses (for example, a terminal device A and a terminal device B), and optionally, further include a network device. In (a) in FIG. 5, both the terminal device A and the terminal device B are within a signal coverage area of the network device. In (b) in FIG. 5, the terminal device A is within the signal coverage area of the network device, but the terminal device B is outside the signal coverage area of the network device. In (c) in FIG. 5, both the terminal device A and the terminal device B are outside the signal coverage area of the network device. In (a) in FIG. 5 and (b) in FIG. 5, the terminal device A and the terminal device B may communicate with each other through a sidelink by using a resource scheduled by the network device, where the resource may be a licensed resource or a licensed frequency band. Alternatively, the terminal device A and the terminal device B may perform resource self-selection, that is, select, from a resource pool, a resource for sidelink communication, where the resource is an unlicensed resource or an unlicensed frequency band. In (c) in FIG. 5, because both the terminal device A and the terminal device B are outside the signal coverage area of the network device, communication can be performed through a sidelink only in a resource self-selection manner.

In addition, embodiments of this application may further relate to more terminal devices, and a specific quantity of terminal devices is not limited. Embodiments of this application may further relate to more network devices, or may not relate to a network device. This is not limited.

In embodiments of this application, a reference signal is, for example, an SL reference signal, and the SL reference signal includes, for example, one or more of the following: an SL CSI-RS, an SL synchronization signal and physical broadcast channel (physical broadcast channel, PBCH) block (synchronization signal/PBCH block, SSB), or an SL DMRS. Alternatively, the SL reference signal may further include another reference signal. In embodiments of this application, a time domain unit is, for example, a subframe (subframe), a slot, a mini-slot (mini-slot), or an orthogonal frequency division multiplexing (orthogonal frequency division multiplexing, OFDM) symbol group, and a time domain subunit is a next-level time domain unit included in the time domain unit. For example, the time domain unit is a subframe, and the time domain subunit is a slot, a mini-slot, an OFDM symbol group, or an OFDM symbol; or the time domain unit is a slot, and the time domain subunit is a mini-slot, an OFDM symbol group, or an OFDM symbol; or the time domain unit is a mini-slot, and the time domain subunit is an OFDM symbol group or an OFDM symbol; or the time domain unit is an OFDM symbol group, and the time domain subunit is an OFDM symbol. One OFDM symbol group may include one or more OFDM symbols. For simplicity, the OFDM symbol is briefly referred to as a symbol below.

In embodiments of this application, a frequency domain unit is, for example, a subchannel (subchannel), a resource block (resource block, RB) set (set), a physical resource block (physical resource block, PRB), a carrier, or a subcarrier.

In embodiments of this application, a method performed by the network device may alternatively be performed by a module (for example, a chip) in the network device, or may be performed by a control subsystem including a function of the network device. The control subsystem including the function of the network device herein may be a control center in the foregoing application scenarios such as smart grid, industrial control, intelligent transportation, and smart city. A method performed by the terminal device may alternatively be performed by a module (for example, a chip or a modem) in the terminal device, or may be performed by an apparatus including a function of the terminal device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

When the method provided in this application is applied to the system in FIG. 5, the method provided in this application may be implemented by the terminal device or a module or a chip in the terminal device in FIG. 5. The method provided in this application may be applied to communication in FR2.

In the following procedure, an example in which devices such as a first terminal device, a second terminal device, and a third terminal device are used as transmit-end devices, and a fourth terminal device is used as a receive-end device is used for description. For example, a beam management procedure is performed between the transmit-end device and the receive-end device, to determine transmit beams used by the transmit-end device and the receive-end device to send signals to each other. The receive-end device may determine, based on a location of a resource reserved by each transmit-end device in time domain, whether to adjust resources in different slots to one slot, so that a plurality of reference signals can be simultaneously received in a same slot, thereby reducing a delay and improving efficiency. Details are described below.

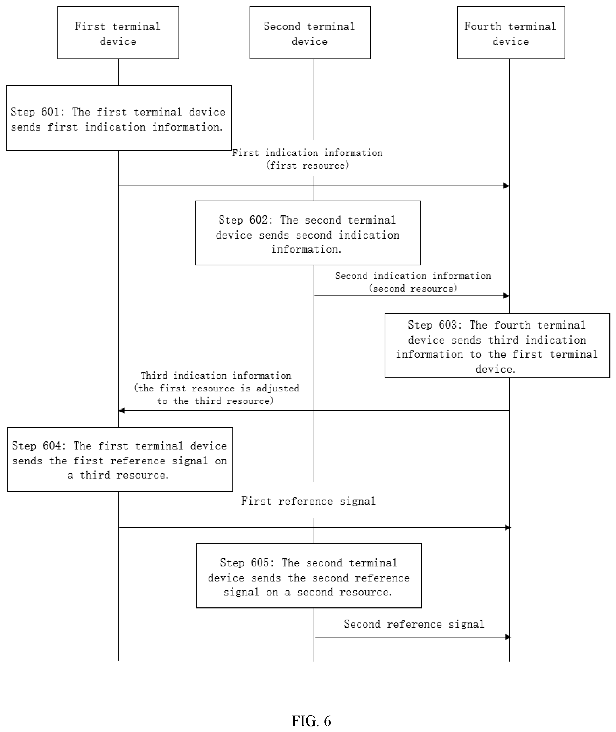

FIG. 6 is a schematic flowchart of a communication method according to an embodiment of this application. The method includes the following steps.

Step 601: A first terminal device sends first indication information.

Correspondingly, a fourth terminal device receives the first indication information.

Step 602: A second terminal device sends second indication information.

Correspondingly, the fourth terminal device receives the second indication information.

The foregoing is merely an example, and a sequence for performing step 601 and step 602 is not limited.

In this application, the first terminal device and the second terminal device are merely used as an example for description, and a quantity of terminal devices that send indication information to the fourth terminal device is not limited in this application. For example, the fourth terminal device may receive indication information from a plurality of terminal devices, and each piece of indication information indicates one resource. The first terminal device and the second terminal device are two of the plurality of terminal devices. The first indication information and the second indication information are two of a plurality of pieces of indication information.

The first indication information indicates a first resource, and the first resource is located in a first slot. The second indication information indicates a second resource, and the second resource is located in a first slot. The first slot is different from the second slot. A slot may alternatively be replaced with another time domain unit, for example, a subframe or a mini-slot. In this application, the slot is used as an example for description. That both the first resource and the second resource are used to transmit signals or data, for example, transmit reference signals, to the fourth terminal device may be understood as that a receiver of the signals or the data carried on the first resource and the second resource is the fourth terminal device. Correspondingly, the fourth terminal device needs to respectively receive signals or data, for example, receive reference signals, on the first resource and the second resource.

The first terminal device may select the first resource from a resource pool. A specific process in which the first terminal device selects the first resource is not limited in this application. For example, refer to the foregoing related descriptions of the autonomous resource selection mode. Similarly, the second terminal device may select the second resource from the resource pool. A specific process is not described.

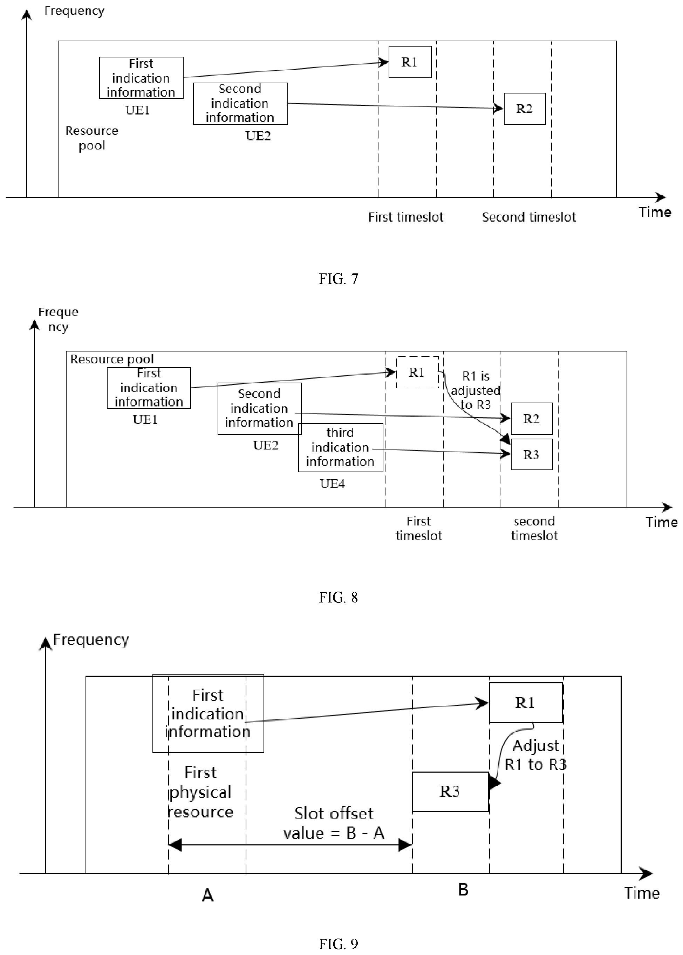

For example, as shown in FIG. 7, the first terminal device UE1 reserves the first resource R1 in the resource pool, and indicates R1 by using the first indication information; and the second terminal device UE2 reserves the second resource R2 in the resource pool, and indicates R2 by using the second indication information.

In addition, the first indication information may indicate a plurality of resources. In other words, the first terminal device may determine a plurality of resources, and indicate the plurality of resources by using the first indication information. A quantity of resources indicated by the first indication information is not limited. Similarly, the second indication information may indicate a plurality of resources, and a quantity of resources indicated by the second indication information is not limited. Step 601 and step 602 are respectively described merely by using an example in which the first indication information indicates the first resource and an example in which the second indication information indicates the second resource. This does not indicate that the first indication information indicates only one resource, and does not indicate that the second indication information indicates only one resource.

In this application, how the first indication information indicates the first resource and how the second indication information indicates the second resource are not limited in this application. For example, the first indication information is used as an example. The first indication information may be located in a frequency resource assignment (Frequency resource assignment) field and a time resource assignment (Time resource assignment) field in a first-stage SCI. The frequency resource assignment field may indicate a frequency domain resource of the resource indicated by the first indication information, and the time resource assignment field may indicate a time domain resource of the resource indicated by the first indication information. The foregoing is merely an example. The first indication information may alternatively be implemented in another manner. This is not limited in this application.

In an implementation, the first terminal device may further send first information, and the second terminal device may further send second information. The first information indicates a source (source) identifier (identifier, ID) and a destination identifier (destination ID) that correspond to the first resource, and the second information indicates a source identifier and a destination identifier that correspond to the second resource. The source identifier corresponding to the first resource is an identifier of a transmit-end device of a reference signal or data carried on the first resource, that is, an identifier of the first terminal device. The destination identifier corresponding to the first resource is an identifier of a receive-end device of the reference signal or the data carried on the first resource, that is, an identifier of the fourth terminal device. Similarly, the source identifier corresponding to the second resource is an identifier of the second terminal device, and the destination identifier corresponding to the second resource is the identifier of the fourth terminal device.

Correspondingly, the fourth terminal device may determine, based on the first information, to receive a reference signal or data on the first resource, and may determine, based on the second information, to receive a reference signal or data on the second resource.

In this application, the first information may be scheduled by using the first indication information, and the second information may be scheduled by using the second indication information. For example, the first indication information and the first information are used as an example. The first indication information is located in the first-stage SCI, and is carried by using a PSCCH. The first information is located in a second-stage SCI, and is carried by using a PSSCH. The first-stage SCI may be used to schedule the second-stage SCI, and the fourth terminal device receives the second-stage SCI based on the first-stage SCI.

In this application, if the fourth terminal device needs to receive, in a same slot, signals or data from the first terminal device and the second terminal device, the fourth terminal device may reselect a resource to replace the first resource or the second resource. For example, in a beam management procedure, if the fourth terminal device determines to receive reference signals on the first resource and the second resource by using a same receive beam, to reduce a delay, the fourth terminal device may reselect a resource in the first slot to replace the second resource, or the fourth terminal device may reselect a resource in the second slot to replace the first resource. In this way, the fourth terminal device may simultaneously receive, in one slot, sidelink reference signals from the first terminal device and the second terminal device.

The foregoing is merely an example. A reason why the fourth terminal device needs to reselect a resource to replace the first resource or the second resource, and a condition in which the fourth terminal device reselects a resource to replace the first resource or the second resource are not limited in this application.

The following uses an example in which the first resource is replaced for description. If the second resource is replaced, a specific procedure is similar to a procedure of replacing the first resource. A specific process is not described again.

Step 603: The fourth terminal device sends third indication information to the first terminal device.

Correspondingly, the first terminal device receives the third indication information.

The third indication information indicates to adjust the first resource to a third resource, and the third resource is located in the second slot.

That the first resource is adjusted to the third resource may also be understood as follows: The first resource is replaced with the third resource, and a signal or data originally sent on the first resource is sent on the third resource, and is no longer sent on the first resource. Alternatively, it may be understood that the fourth terminal device expects to receive, on the third resource, the signal or the data originally carried on the first resource.

A frequency domain resource of the third resource is different from a frequency domain resource of the second resource, or the frequency domain resource of the third resource and the frequency domain resource of the second resource do not overlap in frequency domain. A symbol included in a time domain resource of the third resource in the second slot may be the same as, different from, or partially the same as a symbol included in a time domain resource of the second resource in the second slot. This is not limited in this application.

For example, with reference to FIG. 7, as shown in FIG. 8, the fourth terminal device UE4 indicates the third resource R3 by using the third indication information, to adjust R1 to R3.

In this application, how the fourth terminal device determines the third resource is not limited in this application. For example, the fourth terminal device may select a third resource in the resource pool in a mode 2.

In an implementation, the third indication information includes at least one of the following:
time domain information of the third resource, frequency domain information of the third resource, time domain information of the first resource, and frequency domain information of the first resource.

The time domain information and the frequency domain information of the first resource are from the first indication information. The first terminal device may determine, based on the time domain information and/or the frequency domain information of the first resource that are/is indicated in the third indication information, that a resource that needs to be adjusted is the first resource.

The frequency domain information of the third resource may be a frequency resource indicator value (frequency resource indicator value, FRIV) of the third resource, and a frequency domain resource location of the third resource may be determined based on the FRIV. For example, the FRIV of the third resource may be determined according to the following formula: $FRIV = {n}_{subCH , 1}^{start} + {\sum }_{i = 1}^{{L}_{subCH} - 1} \left({N}_{subchannel}^{SL}+1-i\right)$${n}_{subCH , 1}^{start}$ represents a start subchannel of the third resource, and *L_{subCH}* represents a quantity of subchannels occupied by the third resource. ${N}_{subchannel}^{SL}$ represents a quantity of subchannels included in the resource pool, and ${N}_{subchannel}^{SL}$ may be configured by a network device or a terminal device, or may be predefined in a protocol.

The foregoing is merely an example. The frequency domain information of the third resource may alternatively be other information. This is not limited in this application.

There may be a plurality of implementations of the time domain information of the third resource, which are separately described below.

Implementation 1: The time domain information of the third resource indicates a slot offset value between the third resource and a first physical resource, and the first physical resource is used to carry the first indication information or the third indication information. For example, the slot offset value between the third resource and the first physical resource may be an index of a slot in which the third resource is located minus an index of a slot in which the first physical resource is located, or may be the index of the slot in which the first physical resource is located minus the index of the slot in which the third resource is located. In the following description, an example in which the slot offset value between the third resource and the first physical resource is the index of the slot in which the third resource is located minus the index of the slot in which the first physical resource is located is used for description. Another case is not described.

For example, as shown in FIG. 9, the first physical resource carrying the first indication information is located in a slot whose index is A, and R1 is the first resource. The third resource R3 is located in a slot whose index is B. In this case, a slot offset value indicated by the time domain information of the third resource R3 may be B minus A.

In this implementation, how to implement the third indication information is not limited in this application. For example, the third indication information may be carried by using SCI. For example, a first field and a second field are added to the SCI, the first field is used to carry the time domain information (for example, the slot offset value) of the third resource, and the second field is used to carry the frequency domain information (for example, the FRIV) of the third resource. Names of the first field and the second field are not limited. For example, the first field is referred to as a time_offset field, and the second field is referred to as an FRIV field.

Implementation 2: The time domain information of the third resource includes information indicating a slot offset value between the third resource and the first resource, and includes information indicating a time-domain location relationship between the third resource and the first resource.

In this implementation, the time domain information of the third resource may indicate the slot offset value between the third resource and the first resource. In this case, the time domain information of the third resource may further indicate a location sequence of the third resource and the first resource in time domain, that is, indicate a time sequence of the third resource and the first resource. For example, the slot offset value between the third resource and the first resource may be the index of the slot in which the third resource is located minus an index of a slot in which the first resource is located, or may be the index of the slot in which the first resource is located minus the index of the slot in which the third resource is located. In the following description, an example in which the slot offset value between the third resource and the first resource is the index of the slot in which the third resource is located minus the index of the slot in which the first resource is located is used for description. Another case is not described.

For example, the time domain information of the third resource further includes a flag (flag) of one bit. When the bit is 0, it indicates that the third resource is located before the first resource in time domain. When the bit is 1, it indicates that the first resource is located before the third resource in time domain.

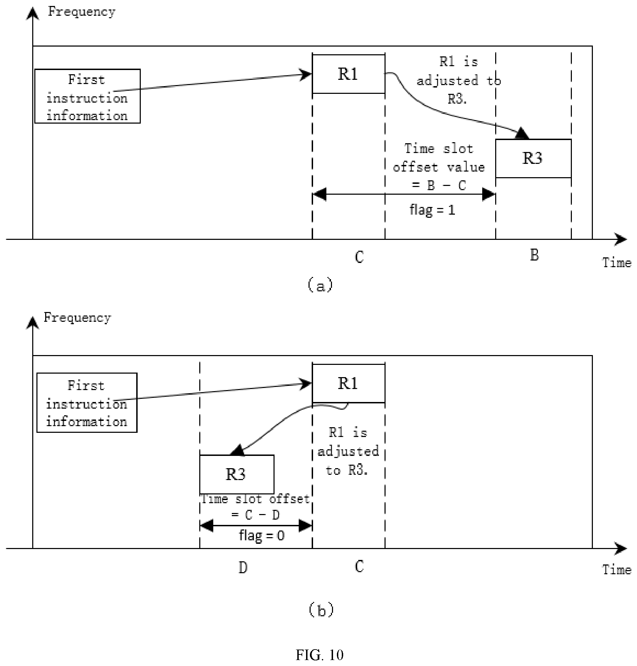

For example, as shown in (a) in FIG. 10, the first resource is located in a slot whose index is C, and the third resource is located in a slot whose index is B. In this case, a slot offset value indicated by the time domain information of the third resource may be B minus C. In this case, the flag in the time domain information of the third resource is equal to 1.

As shown in (b) in FIG. 10, the first resource is located in a slot whose index is C, and the third resource is located in a slot whose index is D. In this case, the slot offset value indicated by the time domain information of the third resource may be C minus D. In this case, the flag in the time domain information of the third resource is equal to 0.

FIG. 10 is merely an example. When the slot offset value in FIG. 10 is B minus C or C minus D, a slot index of a resource that is located at a front in time domain is subtracted by default from a slot index of a resource that is located at a rear in time domain. In an actual application, the slot offset value may alternatively be the slot index of the resource located at the front in time domain minus the slot index of the resource located at the rear in time domain. For example, the slot offset value is C minus B, provided that a manner of determining a slot offset value between two terminal devices through agreement or another manner enables a terminal device that receives the slot offset value to determine an adjusted resource based on the slot offset value.

In this implementation, how to implement the third indication information is not limited in this application. For example, the third indication information may be carried by using SCI. For example, a first field and a second field are added to the SCI, the first field is used to carry the time domain information (for example, the slot offset value) of the third resource, and the second field is used to carry the frequency domain information (for example, the FRIV) of the third resource. Names of the first field and the second field are not limited. Details are not described herein again.

In addition, this implementation may also be applicable to a scenario in which a resource in which the first indication information is located and the first resource are located in different resource pools, or may be applicable to a scenario in which the first resource is located in dedicated resources. The dedicated resources may be located in a resource pool, or may be located in another resource pool. This is not limited in this application.

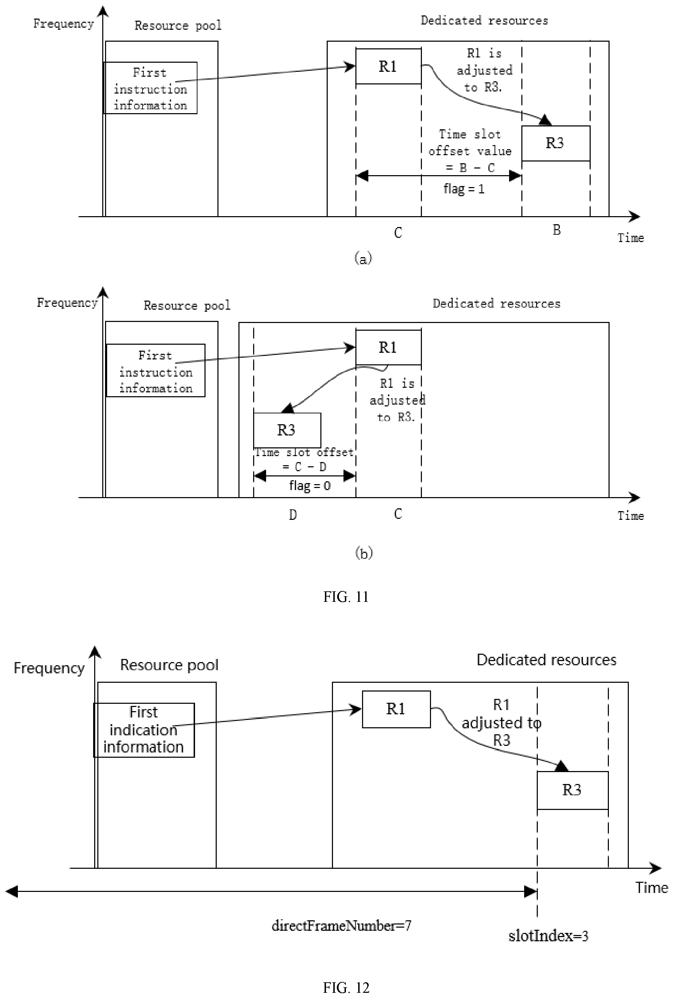

For example, as shown in FIG. 11, the first terminal device sends the first indication information in a resource pool, where the first resource R1 indicated by the first indication information is located in dedicated resources. Both the resource pool and the dedicated resources may be configured by a network device, or may be preset. The third indication information sent by the fourth terminal device is located in the resource pool, and the third resource R2 is located in the dedicated resources.

As shown in (a) in FIG. 11, the first resource is located in a slot whose index is C, and the third resource is located in a slot whose index is B. In this case, a slot offset value indicated by the time domain information of the third resource may be B minus C. In this case, the flag in the time domain information of the third resource is equal to 1.

As shown in (b) in FIG. 11, the first resource is located in a slot whose index is C, and the third resource is located in a slot whose index is D. In this case, the slot offset value indicated by the time domain information of the third resource may be C minus D. In this case, the flag in the time domain information of the third resource is equal to 0.

Implementation 3: The time domain information of the third resource indicates a frame index of the third resource and a slot index (slot index) of the third resource. In this way, an absolute time domain location of the third resource can be directly indicated. The frame index may also be a system frame number (system frame number, SFN). The frame index indicates an index of a frame in which the third resource is located, and the slot index indicates an index of a 1^{st} slot occupied by the third resource in the frame.

In this implementation, how to implement the third indication information is not limited in this application. For example, the third indication information may be carried by using SCI. For example, a first field and a second field are added to the SCI, the first field is used to carry the time domain information (for example, the frame index and the slot index) of the third resource, and the second field is used to carry the frequency domain information (for example, the FRIV) of the third resource. Names of the first field and the second field are not limited. Details are not described herein again. For example, the first field may be referred to as an SFN field, and the first field may include a direct frame number (directFrameNumber) and a slot index (slotIndex).

For example, directFrameNumber includes 10 bits, and a quantity of bits included in slotIndex may be related to a subcarrier spacing (subcarrier spacing, SCS) of the dedicated resource. For example, when SCS=15 kHz, slotIndex includes 4 bits; or when SCS=60 kHz, slotIndex includes 7 bits. On this basis, a remaining slot of the third resource is indicated by using a time offset field in the SCI. For example, as shown in FIG. 12, the first terminal device sends the first indication information in the resource pool, where the first resource R1 indicated by the first indication information is located in the dedicated resources. The fourth terminal device sends the third indication information in the resource pool, where the third indication information indicates to adjust the first resource R1 in the dedicated resources to the third resource R3 in the dedicated resources, and the third resource is located in a 7^{th} slot of a 3^{rd} frame. In this case, a value of directFrameNumber in the SFN field is 3, and a value of slotIndex in the SFN field is 7, indicating that the third resource is located in the 7^{th} slot of the 3^{rd} frame.

Optionally, the first terminal device sends sixth indication information or seventh indication information. The sixth indication information indicates to accept adjusting the first resource to the third resource, and the seventh indication information indicates to reject adjusting the first resource to the third resource.

Correspondingly, the fourth terminal device receives the sixth indication information or the seventh indication information.

In another implementation, the sixth indication information or the seventh indication information may be replaced with eighth indication information. When the eighth indication information is a first value, it indicates that adjusting the first resource to the third resource is accepted. When the eighth indication information is a second value, it indicates that adjusting the first resource to the third resource is rejected. For example, the first value is 1, and the second value is 0. This is not limited in this application.

If the first terminal device accepts adjusting the first resource to the third resource, a signal or data originally transmitted on the first resource is transmitted on the third resource, and the first resource may no longer be used, or transmission of other data may be performed on the first resource. If the first terminal device rejects adjusting the first resource to the third resource, the first terminal device continues to perform transmission of a signal or data on the first resource.

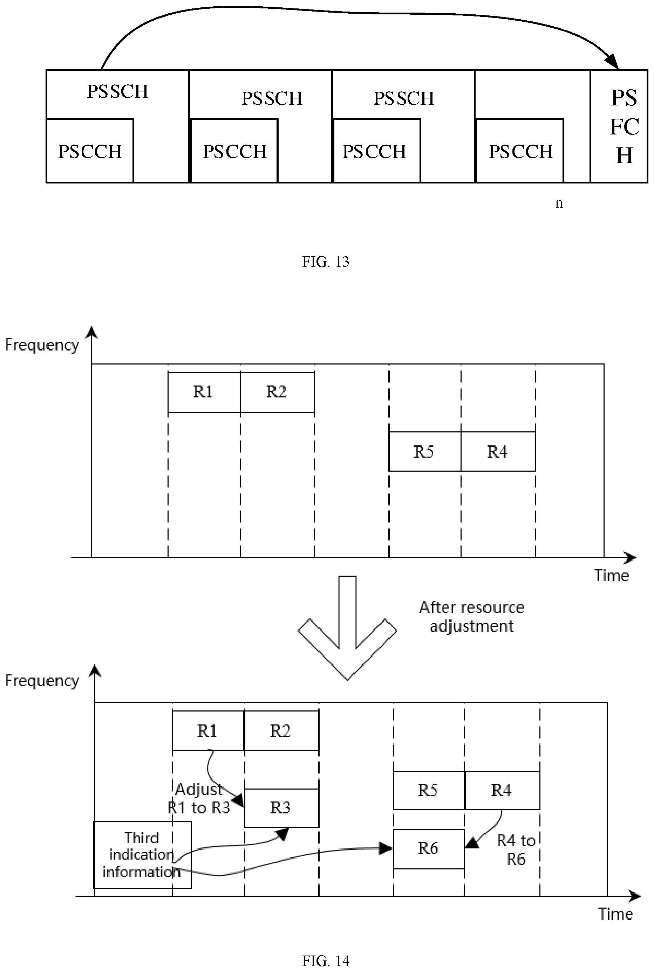

In this application, the sixth indication information or the seventh indication information may be carried by using a PSFCH. For example, as shown in FIG. 13, transmission of the third indication information is performed by using SCI or a MAC control element (control element, CE), and a PSFCH resource corresponding to the SCI or the MAC CE is located in a slot n, that is, a PSFCH resource in a slot to which an arrow points in the figure. The sixth indication information or the seventh indication information corresponding to the third indication information may be carried on a PSFCH resource corresponding to the third indication information. For example, a value of the sixth indication information is 1, and a value of the seventh indication information is 0. If the first terminal device accepts adjusting the first resource to the third resource, the first terminal device performs transmission of 1 in the PSFCH resource corresponding to the SCI or the MAC CE. If the first terminal device rejects adjusting the first resource to the third resource, the first terminal device performs transmission of 0 in the PSFCH resource corresponding to the SCI or the MAC CE. The foregoing is merely an example. The sixth indication information and the seventh indication information may alternatively have other values. Details are not described herein.

It is assumed that the first terminal device sends the sixth indication information or the eighth indication information, and the eighth indication information is the first value, that is, the first terminal device accepts adjusting the first resource to the third resource. The following procedure may be further included.

Step 604: The first terminal device sends a first reference signal on the third resource.

Correspondingly, the fourth terminal device receives the first reference signal on the third resource.

Step 605: The second terminal device sends a second reference signal on the second resource.

Correspondingly, the fourth terminal device receives the second reference signal on the second resource.

The foregoing is merely an example, and a sequence for performing step 604 and step 605 is not limited.

In step 604 and step 605, an example in which the third resource carries the first reference signal and the second resource carries the second reference signal is used for description. The third resource and/or the second resource may alternatively carry other information, for example, carry data or signaling. This is not limited in this application.

If this application is applied to FR2, to be specific, the third resource and the second resource are resources in FR2, the fourth terminal device may further receive the first reference signal and the second reference signal by using a same receive beam.

The fourth terminal device may further measure the first reference signal, to obtain a first measurement result. For example, the first measurement result includes a first RSRP of the first reference signal. The fourth terminal device may further measure the second reference signal, to obtain a second measurement result. For example, the second measurement result includes a second RSRP of the second reference signal. The fourth terminal device may respectively send the first measurement result to the first terminal device, and send the second measurement result to the second terminal device. A specific process is not described.

According to the method provided in this application, when determining to receive, in different slots, reference signals in different resources, the fourth terminal device may adjust resources in the different slots to a same slot. In this way, the fourth terminal device can receive, in the same slot, the reference signals in the different resources, thereby improving receiving efficiency and reducing a transmission delay of the reference signals. Particularly, in a beam management procedure, the first terminal device reserves to send the first reference signal on the first resource by using a first transmit beam, and the second terminal device reserves to send the second reference signal on the second resource by using a second transmit beam. If the fourth terminal device receives the first reference signal and the second reference signal by using a first receive beam, the fourth terminal device may adjust the first resource to the third resource in the second slot. In this way, the fourth terminal device can receive and determine the first reference signal and the second reference signal in a same slot, thereby avoiding frequent beam switching. In this way, the fourth terminal device may receive, in the second slot, a plurality of reference signals on a plurality of resources by using a same receive beam, thereby improving beam sweeping efficiency and reducing a beam sweeping delay.

In the foregoing description, an example in which two terminal devices (the first terminal device and the second terminal device) respectively send a reference signal to the fourth terminal device on one resource is used for description. For example, in the beam management procedure, one terminal device may reserve a plurality of resources, and send a reference signal on each of the plurality of resources, and each terminal device sends a reference signal on each of the plurality of resources by using a different transmit beam. In this case, if a plurality of terminal devices simultaneously perform a beam management procedure with the fourth terminal device, the fourth terminal device may simultaneously adjust a plurality of resources. To be specific, the fourth terminal device may indicate a plurality of resources to be adjusted and a plurality of resources after adjustment by using the third indication information.

The following uses an example in which the third indication information indicates two resources to be adjusted and resources after adjustment for description. Another case may be deduced by analogy. Details are not described again.

In an implementation, it is assumed that the first terminal device further sends fourth indication information, the fourth indication information indicates a fourth resource, and the fourth resource is located in a third slot. The fourth indication information and the first indication information may be same information, in other words, the first indication information indicates both the first resource and the fourth resource.

The fourth terminal device may further receive fifth indication information from a third terminal device. The fifth indication information indicates a fifth resource, and the fifth resource is located in a fourth slot. An example in which the fifth indication information is sent by the third terminal device is used for description. Alternatively, the fifth indication information may be sent by the second terminal device. A terminal device that sends the fifth indication information is not limited in this application. For other content of the fourth indication information and the fifth indication information, refer to descriptions of the first indication information. Details are not described herein again.

The fourth slot is different from the fifth slot. That both the fourth resource and the fifth resource are used to transmit signals or data, for example, transmit reference signals, to the fourth terminal device may be understood as that a receiver of signals or data carried on the fourth resource and the fifth resource is the fourth terminal device. Correspondingly, the fourth terminal device needs to respectively receive signals or data, for example, receive reference signals, on the fourth resource and the fifth resource.

In this implementation, the third indication information further indicates to adjust the fourth resource to a sixth resource, and the sixth resource is located in the fourth slot. The sixth resource is determined by the fourth terminal device. A specific determining process is not limited in this application, and details are not described herein.

That the fourth resource is adjusted to the sixth resource may also be understood as follows: The fourth resource is replaced with the sixth resource, and a signal or data originally sent on the fourth resource is sent on the sixth resource, and is no longer sent on the fourth resource. Alternatively, it may be understood that the fourth terminal device expects to receive, on the sixth resource, the signal or the data originally carried on the fourth resource.

In an implementation, the first terminal device may further send third information, and the third terminal device may further send fourth information. The third information indicates a source identifier and a destination identifier that correspond to the fourth resource, and the fourth information indicates a source identifier and a destination identifier that correspond to the fifth resource. The source identifier corresponding to the fourth resource may be an identifier of the second terminal device. The destination identifier corresponding to the fourth resource may be an identifier of the fourth terminal device. Similarly, the source identifier corresponding to the fifth resource may be an identifier of the third terminal device, and the destination identifier corresponding to the fifth resource may be the identifier of the fourth terminal device.

Correspondingly, the fourth terminal device may determine, based on the third information, to receive a reference signal or data on the fourth resource, and may determine, based on the fourth information, to receive a reference signal or data on the fifth resource.

In this application, the third information may be scheduled by using the fourth indication information, and the fourth information may be scheduled by using the fifth indication information. For details, refer to descriptions of the first indication information and the first information. Details are not described herein again.

In this application, a frequency domain resource of the sixth resource is different from a frequency domain resource of the fifth resource, or the frequency domain resource of the sixth resource and the frequency domain resource of the fifth resource do not overlap in frequency domain. A symbol included in a time domain resource of the sixth resource in the fourth slot may be the same as, different from, or partially the same as a symbol included in a time domain resource of the fifth resource in the fourth slot. This is not limited in this application.

For example, as shown in FIG. 14, a first terminal device indicates a first resource R1 by using first indication information, and indicates a fourth resource R4 by using fourth indication information; a second terminal device UE2 indicates a second resource R2 by using second indication information; and a third terminal device UE3 indicates a fifth resource R5 by using fifth indication information. This is merely an example. The first terminal device, the second terminal device, or the third terminal device may alternatively indicate another resource. Alternatively, another terminal device may indicate a resource to a fourth terminal device.

It is assumed that R1, R2, R4, and R5 are all resources used to send reference signals to the fourth terminal device, and the fourth terminal device determines to respectively receive reference signals by using a first receive beam, the first receive beam, a second receive beam, and the second receive beam. Because the fourth terminal device receives reference signals on R1 and R2 by using a same receive beam, and receives reference signals on R4 and R5 by using a same receive beam, the fourth terminal device may adjust R1 to a resource R3, where R3 and R2 are located in a same slot, and adjust R4 to a resource R6, where R6 and R5 are located in a same slot. In this way, the fourth terminal device can receive, in a same slot, reference signals in a plurality of resources by using a same receive beam, thereby reducing a beam switching frequency and improving efficiency.

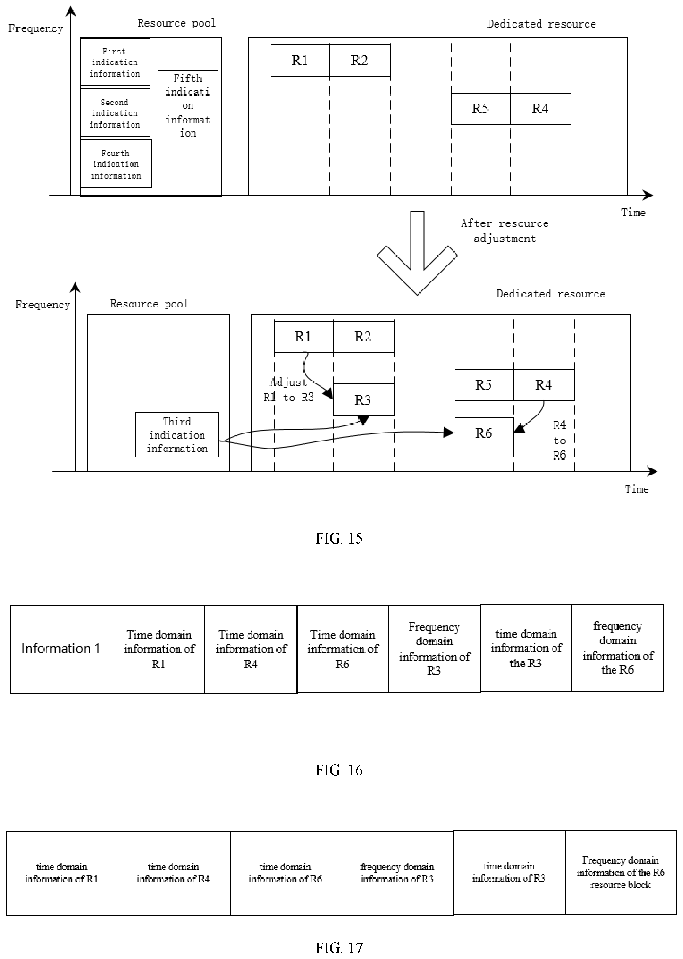

This application may also be applicable to a scenario in which indication information and a resource indicated by the indication information are located in different resource pools, or may be applicable to a scenario in which the first resource to a sixth resource are located in dedicated resources. For example, as shown in FIG. 15, resources carrying the first indication information to the fifth indication information are all located in a resource pool. The first resource R1, the second resource R1, the third resource R2, the fourth resource R4, the fifth resource R5, and the sixth resource R6 are all located in the dedicated resources.

In this application, if third indication information indicates to adjust the first resource to the third resource and adjust the fourth resource to the sixth resource, the third indication information may include at least one of the following:
time domain information of the third resource, frequency domain information of the third resource, time domain information of the first resource, frequency domain information of the first resource,
time domain information of the fourth resource, frequency domain information of the fourth resource, time domain information of the sixth resource, and frequency domain information of the sixth resource.

The time domain information and the frequency domain information of the fourth resource may be from the fourth indication information. For how the third indication information indicates the time domain information and the frequency domain information of the sixth resource, refer to related descriptions of indicating the time domain information and the frequency domain information of the third resource by the third indication information. Details are not described herein again.

Similarly, the first terminal device may indicate, by using indication information, whether to accept adjusting the fourth resource to the sixth resource or reject adjusting the fourth resource to the sixth resource. For details, refer to the foregoing descriptions. Details are not described herein again.

In this application, when the third indication information indicates a plurality of resources to be adjusted and a plurality of resources after adjustment, the third indication information may explicitly indicate a resource after adjustment corresponding to each of the plurality of resources to be adjusted. In this way, the first terminal device can determine a specific resource to be adjusted and a resource after adjustment.

For example, with reference to FIG. 14, as shown in FIG. 16, the third indication information includes information 1, and the information 1 indicates that R1 corresponds to R3, and R4 corresponds to R6. In this way, the first terminal device may determine that R1 is adjusted to R3, and R4 is adjusted to R6. In addition, the third indication information may further include other information, for example, the time domain information of R1, the time domain information of R4, the time domain information of R3, the frequency domain information of R3, the time domain information of R6, and the frequency domain information of R6.

In another implementation, the third indication information may implicitly indicate a resource after adjustment corresponding to each of the plurality of resources to be adjusted. For example, the third indication information indicates to adjust the first resource to the third resource and adjust the fourth resource to the sixth resource. When the third indication information includes the time domain information of the third resource and the time domain information of the sixth resource, a location sequence of the time domain information of the third resource and the time domain information of the sixth resource in the third indication information is the same as a location sequence of the first resource and the fourth resource in time domain.

When the third indication information includes the frequency domain information of the third resource and the frequency domain information of the sixth resource, a location sequence of the frequency domain information of the third resource and the frequency domain information of the sixth resource in the third indication information is the same as a location sequence of the first resource and the fourth resource in time domain.

For example, with reference to FIG. 14, as shown in FIG. 17, because R3 is located before R6 in time domain, the time domain information of R3 included in the third indication information is located before the time domain information of R6, and the frequency domain information of R3 included in the third indication information is located before the frequency domain information of R6. If R3 is located after R6 in time domain, the time domain information of R3 included in the third indication information is located after the time domain information of R6, and the frequency domain information of R3 included in the third indication information is located after the frequency domain information of R6.

It may be understood that, to implement functions in the foregoing embodiments, a terminal device or a network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. These communication apparatuses may be configured to implement functions of the terminal device or the network device in the foregoing method embodiments. Therefore, beneficial effects of the foregoing method embodiments can also be implemented.

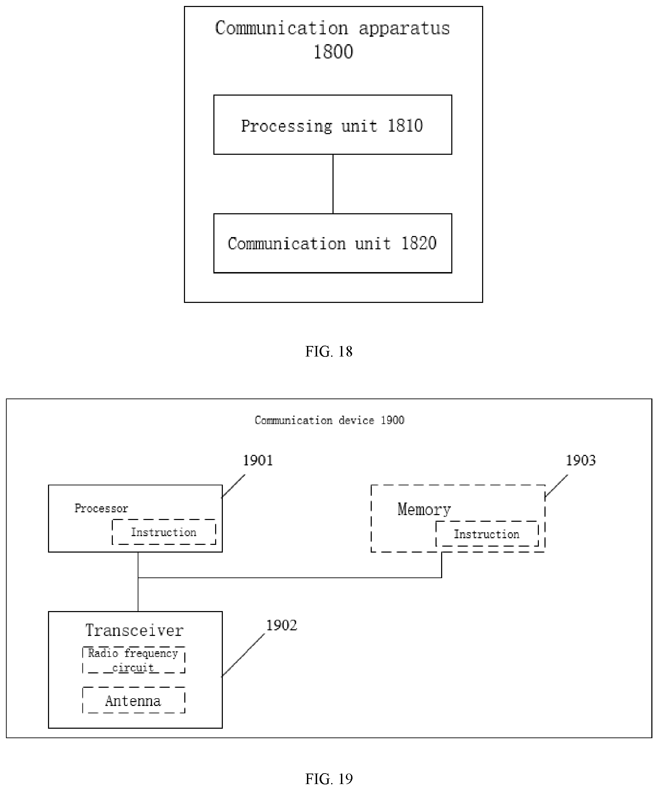

As shown in FIG. 18, a communication apparatus 1800 includes a processing unit 1810 and a communication unit 1820. The communication apparatus 1800 is configured to implement a function of the terminal device or the network device in the foregoing method embodiments.

When the communication apparatus 1800 is configured to implement a function of a first terminal device,
the processing unit is configured to receive first indication information from the first terminal device, and receive second indication information from a second terminal device via the communication unit, where the first indication information indicates a first resource, the second indication information indicates a second resource, the first resource is located in a first slot, and the second resource is located in a second slot.

The processing unit is configured to send third indication information to the first terminal device via the communication unit, where the third indication information indicates to adjust the first resource to a third resource, and the third resource is located in the second slot.

The processing unit is configured to receive a first reference signal from the first terminal device on the third resource, and receive a second reference signal from the second terminal device on the second resource via the communication unit.

In an implementation, before the sending the third indication information to the first terminal device, the processing unit is further configured to:
determine to receive reference signals on the first resource and the second resource by using a same receive beam.

In an implementation, the third indication information includes at least one of the following: time domain information of the third resource, frequency domain information of the third resource, time domain information of the first resource, and frequency domain information of the first resource.

In an implementation, the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

In an implementation, the communication unit is further configured to:
receive fourth indication information from the first terminal device, and receive fifth indication information from a third terminal device, where the fourth indication information indicates a fourth resource, the fifth indication information indicates a fifth resource, the fourth resource is located in a third slot, and the fifth resource is located in a fourth slot, where the third indication information further indicates to adjust the fourth resource to a sixth resource, and the sixth resource is located in the fourth slot.

In an implementation, the third indication information further includes at least one of the following:
time domain information of the fourth resource, frequency domain information of the fourth resource, time domain information of the sixth resource, and frequency domain information of the sixth resource.

When the communication apparatus 1800 is configured to implement a function of a first terminal device,
the processing unit is configured to send first indication information via the communication unit, where the first indication information indicates a first resource, and the first resource is located in a first slot.

The processing unit is configured to receive third indication information from a fourth terminal device via the communication unit, where the third indication information indicates to adjust the first resource to a third resource, and the third resource is located in a second slot.

The processing unit is configured to send a first reference signal on the third resource via the communication unit.

In an implementation, the third indication information includes at least one of the following:
time domain information of the third resource, frequency domain information of the third resource, time domain information of the first resource, and frequency domain information of the first resource.

In an implementation, the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

In an implementation, when the time domain information of the third resource indicates the slot offset value between the third resource and the first resource, the time domain information of the third resource further indicates a location sequence of the third resource and the first resource in time domain.

In an implementation, the apparatus further includes:
sending fourth indication information, where the fourth indication information indicates a fourth resource, and the fourth resource is located in a third slot, where
the third indication information further indicates to adjust the fourth resource to a sixth resource, and the sixth resource is located in a fourth slot.

For more detailed descriptions about the processing unit 1810 and the communication unit 1820, directly refer to related descriptions in the foregoing method embodiments. Details are not described herein.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

In another possible product form, the terminal device or the network device in embodiments of this application may be implemented by using a general bus architecture. For ease of description, FIG. 19 is a diagram of a structure of a communication apparatus 1900 according to an embodiment of this application. The communication apparatus 1900 includes a processor 1901 and a transceiver 1902. The communication apparatus 1900 may be a network device, or a chip or a chip system in the network device. Alternatively, the communication apparatus 1900 may be a terminal device, or a chip or a module in the terminal device. FIG. 19 shows only main components of the communication apparatus 1900. In addition to the processor 1901 and the transceiver 1902, the communication apparatus 1900 may further include a memory 1903 and an input/output apparatus (not shown in the figure).

Optionally, the processor 1901 is mainly configured to process a communication protocol and communication data, control the entire communication apparatus, execute a software program, and process data of the software program. The memory 1903 is mainly configured to store the software program and the data. The transceiver 1902 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user.

Optionally, the processor 1901, the transceiver 1902, and the memory 1903 may be connected through a communication bus.

After the communication apparatus is powered on, the processor 1901 may read the software program in the memory 1903, interpret and execute instructions of the software program, and process the data of the software program. When data needs to be sent in a wireless manner, the processor 1901 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1901. The processor 1901 converts the baseband signal into data and processes the data.

In another implementation, the radio frequency circuit and the antenna may be disposed independently of the processor for baseband processing. For example, in a distributed scenario, the radio frequency circuit and the antenna may be remotely disposed independently of the communication apparatus.

In some embodiments, in hardware implementation, a person skilled in the art may figure out that the foregoing communication apparatus 1800 may be in a form of the communication apparatus 1900 shown in FIG. 19.

In an example, a function/an implementation process of the processing unit 1810 in FIG. 18 may be implemented by the processor 1901 in the communication apparatus 1900 shown in FIG. 19 by invoking computer-executable instructions stored in the memory 1903. A function/an implementation process of the communication unit 1820 in FIG. 18 may be implemented by the transceiver 1902 in the communication apparatus 1900 shown in FIG. 19.

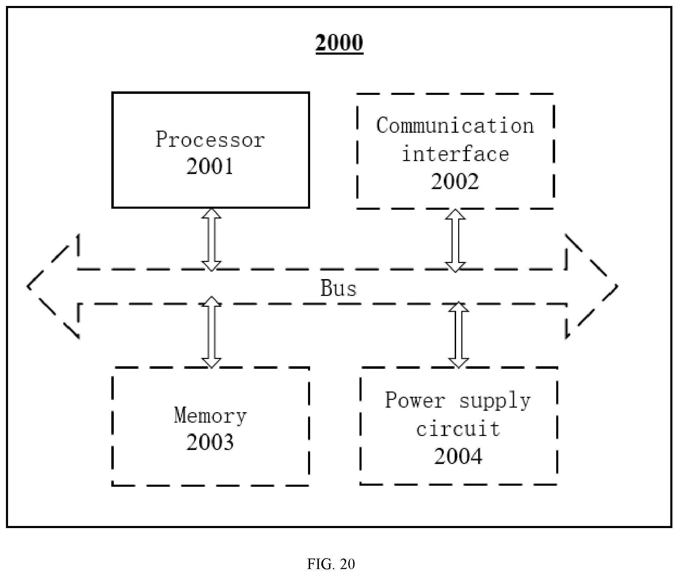

In still another possible product form, the terminal device or the network device in this application may use a composition structure shown in FIG. 20, or include components shown in FIG. 20. FIG. 20 is a diagram of composition of a communication apparatus 2000 according to this application.

As shown in FIG. 20, the communication apparatus 2000 includes at least one processor 2001. Optionally, the communication apparatus further includes a communication interface 2002.

When related program instructions are executed in the at least one processor 2001, the communication apparatus 2000 may be caused to implement the method provided in any one of the foregoing embodiments and any possible design of the method. Alternatively, the processor 2001 is configured to implement, by using a logic circuit or by executing code instructions, the method provided in any one of the foregoing embodiments and any possible design of the method.

The communication interface 2002 may be configured to receive the program instructions and transmit the program instructions to the processor. Alternatively, the communication interface 2002 may be configured to perform communication interaction between the communication apparatus 2000 and another communication device, for example, exchange control signaling and/or service data. For example, the communication interface 2002 may be configured to receive a signal from an apparatus other than the communication apparatus 2000, and transmit the signal to the processor 2001, or send a signal from the processor 2001 to a communication apparatus other than the communication apparatus 2000.

Optionally, the communication interface 2002 may be a code and/or data read/write interface circuit. Alternatively, the communication interface 2002 may be a signal transmission interface circuit between a communication processor and a transceiver, or may be a pin of a chip.

Optionally, the communication apparatus 2000 may further include at least one memory 2003, and the memory 2003 may be configured to store the related program instructions and/or data that are/is required. It should be noted that the memory 2003 may exist independently of the processor 2001, or may be integrated with the processor 2001. The memory 2003 may be located inside the communication apparatus 2000, or may be located outside the communication apparatus 2000. This is not limited.

Optionally, the communication apparatus 2000 may further include a power supply circuit 2004, and the power supply circuit 2004 may be configured to supply power to the processor 2001. The power supply circuit 2004 may be located in a same chip as the processor 2001, or may be located in a chip other than a chip in which the processor 2001 is located.

Optionally, the communication apparatus 2000 may further include a bus, and parts of the communication apparatus 2000 may be interconnected through the bus.

In some embodiments, in hardware implementation, a person skilled in the art may figure out that the foregoing communication apparatus 1800 shown in FIG. 18 may be in a form of the communication apparatus 2000 shown in FIG. 20.

In an example, a function/an implementation process of the processing unit 1810 in FIG. 18 may be implemented by the processor 2001 in the communication apparatus 2000 shown in FIG. 20 by invoking computer-executable instructions stored in the memory 2003. A function/an implementation process of the communication unit 1820 in FIG. 18 may be implemented by the communication interface 2002 in the communication apparatus 2000 shown in FIG. 20.

It should be noted that the structure shown in FIG. 20 does not constitute a specific limitation on the terminal device or the network device. For example, in some other embodiments of this application, the terminal device or the network device may include more or fewer components than those shown in the figure, or some components may be combined, or some components may be split, or different component arrangements may be used. The components shown in the figure may be implemented by hardware, software, or a combination of software and hardware.

When the communication apparatus is a chip used in the terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of protection defined by the claims of this application and equivalent technologies thereof.

## Claims

1. A communication method, comprising:
receiving first indication information from a first terminal device, and receiving second indication information from a second terminal device, wherein the first indication information indicates a first resource, the second indication information indicates a second resource, the first resource is located in a first slot, and the second resource is located in a second slot;
sending third indication information to the first terminal device, wherein the third indication information indicates to adjust the first resource to a third resource, and the third resource is located in the second slot; and
receiving a first reference signal from the first terminal device on the third resource, and receiving a second reference signal from the second terminal device on the second resource.

2. The method according to claim 1, wherein before the sending the third indication information to the first terminal device, the method further comprises:
determining to receive reference signals on the first resource and the second resource by using a same receive beam.

3. The method according to claim 1, wherein the third indication information comprises at least one of the following:
time domain information of the third resource, frequency domain information of the third resource, time domain information of the first resource, and frequency domain information of the first resource.

4. The method according to claim 3, wherein the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

5. The method according to claim 4, wherein when the time domain information of the third resource indicates the slot offset value between the third resource and the first resource, the time domain information of the third resource further indicates a location sequence of the third resource and the first resource in time domain.

6. The method according to any one of claims 1 to 5, wherein the method further comprises:
receiving fourth indication information from the first terminal device, and receiving fifth indication information from a third terminal device, wherein the fourth indication information indicates a fourth resource, the fifth indication information indicates a fifth resource, the fourth resource is located in a third slot, and the fifth resource is located in a fourth slot, wherein
the third indication information further indicates to adjust the fourth resource to a sixth resource, and the sixth resource is located in the fourth slot.

7. The method according to claim 6, wherein the third indication information further comprises at least one of the following:
time domain information of the fourth resource, frequency domain information of the fourth resource, time domain information of the sixth resource, and frequency domain information of the sixth resource.

8. The method according to claim 6 or 7, wherein when the third indication information comprises the time domain information of the third resource and the time domain information of the sixth resource, a location sequence of the time domain information of the third resource and the time domain information of the sixth resource in the third indication information is the same as a location sequence of the first resource and the fourth resource in time domain; and/or
when the third indication information comprises the frequency domain information of the third resource and the frequency domain information of the sixth resource, a location sequence of the frequency domain information of the third resource and the frequency domain information of the sixth resource in the third indication information is the same as a location sequence of the first resource and the fourth resource in time domain.

9. The method according to any one of claims 1 to 8, wherein the method further comprises:
receiving sixth indication information or seventh indication information from the first terminal device, wherein the sixth indication information indicates to accept adjusting the first resource to the third resource, and the seventh indication information indicates to reject adjusting the first resource to the third resource.

10. A communication method, comprising:
sending first indication information, wherein the first indication information indicates a first resource, and the first resource is located in a first slot;
receiving third indication information from a fourth terminal device, wherein the third indication information indicates to adjust the first resource to a third resource, and the third resource is located in a second slot; and
sending a first reference signal on the third resource.

11. The method according to claim 10, wherein the method further comprises:
sending sixth indication information or seventh indication information to the fourth terminal device, wherein the sixth indication information indicates to accept adjusting the first resource to the third resource, and the seventh indication information indicates to reject adjusting the first resource to the third resource.

12. The method according to claim 10 or 11, wherein the third indication information comprises at least one of the following:
time domain information of the third resource, frequency domain information of the third resource, time domain information of the first resource, and frequency domain information of the first resource.

13. The method according to claim 12, wherein the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

14. The method according to claim 13, wherein when the time domain information of the third resource indicates the slot offset value between the third resource and the first resource, the time domain information of the third resource further indicates a location sequence of the third resource and the first resource in time domain.

15. The method according to any one of claims 9 to 14, wherein the method further comprises:
sending fourth indication information, wherein the fourth indication information indicates a fourth resource, and the fourth resource is located in a third slot, wherein
the third indication information further indicates to adjust the fourth resource to a sixth resource, and the sixth resource is located in the fourth slot.

16. The method according to claim 15, wherein the third indication information further comprises at least one of the following:
time domain information of the fourth resource, frequency domain information of the fourth resource, time domain information of the sixth resource, and frequency domain information of the sixth resource.

17. The method according to claim 15 or 16, wherein when the third indication information comprises the time domain information of the third resource and the time domain information of the sixth resource, a location sequence of the time domain information of the third resource and the time domain information of the sixth resource in the third indication information is the same as a location sequence of the first resource and the fourth resource in time domain; and/or
when the third indication information comprises the frequency domain information of the third resource and the frequency domain information of the sixth resource, a location sequence of the frequency domain information of the third resource and the frequency domain information of the sixth resource in the third indication information is the same as a location sequence of the first resource and the fourth resource in time domain.

18. A communication apparatus, comprising:
a processing unit, configured to receive first indication information from a first terminal device, and receive second indication information from a second terminal device via a communication unit, wherein the first indication information indicates a first resource, the second indication information indicates a second resource, the first resource is located in a first slot, and the second resource is located in a second slot, wherein
the processing unit is configured to send third indication information to the first terminal device via the communication unit, wherein the third indication information indicates to adjust the first resource to a third resource, and the third resource is located in the second slot; and
the processing unit is configured to receive a first reference signal from the first terminal device on the third resource, and receive a second reference signal from the second terminal device on the second resource via the communication unit.

19. The apparatus according to claim 18, wherein before the sending the third indication information to the first terminal device, the processing unit is further configured to:
determine to receive reference signals on the first resource and the second resource by using a same receive beam.

20. The apparatus according to claim 18, wherein the third indication information comprises at least one of the following:
time domain information of the third resource, frequency domain information of the third resource, time domain information of the first resource, and frequency domain information of the first resource.

21. The apparatus according to claim 20, wherein the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

22. The apparatus according to any one of claims 18 to 21, wherein the communication unit is further configured to:
receive fourth indication information from the first terminal device, and receive fifth indication information from a third terminal device, wherein the fourth indication information indicates a fourth resource, the fifth indication information indicates a fifth resource, the fourth resource is located in a third slot, and the fifth resource is located in a fourth slot, wherein
the third indication information further indicates to adjust the fourth resource to a sixth resource, and the sixth resource is located in the fourth slot.

23. The apparatus according to claim 22, wherein the third indication information further comprises at least one of the following:
time domain information of the fourth resource, frequency domain information of the fourth resource, time domain information of the sixth resource, and frequency domain information of the sixth resource.

24. A communication apparatus, comprising:
a processing unit, configured to send first indication information via a communication unit, wherein the first indication information indicates a first resource, and the first resource is located in a first slot, wherein
the processing unit is configured to receive third indication information from a fourth terminal device via the communication unit, wherein the third indication information indicates to adjust the first resource to a third resource, and the third resource is located in a second slot; and
the processing unit is configured to send a first reference signal on the third resource via the communication unit.

25. The apparatus according to claim 24, wherein the third indication information comprises at least one of the following:
time domain information of the third resource, frequency domain information of the third resource, time domain information of the first resource, and frequency domain information of the first resource.

26. The apparatus according to claim 25, wherein the time domain information of the third resource indicates a slot offset value between the third resource and the first resource; or
the time domain information of the third resource indicates a slot offset value between the third resource and a first physical resource, and the first physical resource is used to carry the first indication information; or
the time domain information of the third resource indicates a frame index of the third resource and a slot index of the third resource.

27. The apparatus according to claim 26, wherein when the time domain information of the third resource indicates the slot offset value between the third resource and the first resource, the time domain information of the third resource further indicates a location sequence of the third resource and the first resource in time domain.

28. The apparatus according to any one of claims 24 to 27, wherein the communication unit is further configured to:
send fourth indication information, wherein the fourth indication information indicates a fourth resource, and the fourth resource is located in a third slot, wherein
the third indication information further indicates to adjust the fourth resource to a sixth resource, and the sixth resource is located in the fourth slot.

29. A communication system, comprising a first terminal device and a fourth terminal device, wherein
the fourth terminal device is configured to implement the method according to any one of claims 1 to 9; and
the first terminal device is configured to implement the method according to any one of claims 10 to 17.

30. A communication apparatus, comprising a processor and a memory, wherein
the processor is configured to execute a computer program or instructions stored in the memory, to cause the communication apparatus to implement the method according to any one of claims 1 to 17.

31. A computer-readable storage medium, storing a computer program or instructions, wherein when the computer program or the instructions are run on a computer, the computer is caused to implement the method according to any one of claims 1 to 17.

32. A chip, comprising a processor, wherein the processor is coupled to a memory, and is configured to execute a computer program or instructions stored in the memory, to cause the chip to implement the method according to any one of claims 1 to 17.

33. A computer program product, wherein when a computer reads and executes the computer program product, the method according to any one of claims 1 to 17 is performed.
